(19) Europäisches Patentamt
European Patent Office
Office européen des brevets

(11) **EP 2 631 973 B1**

(12) **EUROPEAN PATENT SPECIFICATION**

(45) Date of publication and mention
of the grant of the patent:
**27.07.2016   Bulletin 2016/30**

(51) Int Cl.:
***H01M 4/1395*** (2010.01)          ***H01M 4/38*** (2006.01)

(21) Application number: **13156207.6**

(22) Date of filing: **21.02.2013**

(54) **Electrode for lithium secondary battery, manufacturing method thereof and lithium secondary battery comprising the same**

Elektrode für Lithiumsekundärbatterie, Herstellungsverfahren dafür und Lithiumsekundärbatterie damit

Électrode pour batterie secondaire au lithium, son procédé de fabrication et batterie secondaire au lithium la contenant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.02.2012   US 201261601420 P**
**23.08.2012   US 201213593468**

(43) Date of publication of application:
**28.08.2013   Bulletin 2013/35**

(73) Proprietor: **Samsung SDI Co., Ltd.**
**Gyeonggi-do 446-557 (KR)**

(72) Inventors:
• **Suh, Soon-Sung**
**Gyeonggi-do (KR)**
• **Matulevich, Yury**
**Chungcheongnam-do**
**331-300 (KR)**
• **Kwon, Seung-Uk**
**Gyeonggi-do (KR)**
• **Park, Yo-Han**
**Gyeonggi-do (KR)**
• **Jeong, Chang-Ui**
**Gyeonggi-do (KR)**
• **Kim, Jae-Hyuk**
**Gyeonggi-do (KR)**
• **Lee, Chun-Gyoo**
**Gyeonggi-do (KR)**
• **Choi, Jong-Seo**
**Chungcheongnam-do**
**331-300 (KR)**

(74) Representative: **Mounteney, Simon James**
**Marks & Clerk LLP**
**90 Long Acre**
**London**
**WC2E 9RA (GB)**

(56) References cited:
**WO-A1-2007/064531     US-A1- 2005 031 957**

**Description**

[Detailed Description of the Invention]

[Technical Field]

The present invention relates to an electrode for a lithium secondary battery, a method of manufacturing the electrode, and a lithium secondary battery including the electrode.

[Background of Prior Art]

Lithium secondary batteries that are attractive for use as a power source of small and portable electronic devices use organic electrolytic solutions and due to the use of organic electrolytic solutions, they have a discharge voltage that is two or more times greater than that of a typical battery using an alkali aqueous solution and thus shows high energy density.

Positive and negative electrodes of a lithium secondary battery include a material that enables intercalation and deintercalation of lithium ions, and a space between the positive electrode and the negative electrode is filled with an organic electrolytic solution or a polymer electrolytic solution, and electric energy is generated by oxidation and reduction reactions occurring when lithium ions are intercalated into or deintercalated from the positive electrode and the negative electrode.

Although such lithium secondary batteries have excellent battery properties having high electromotive force and high energy density, the industrial development requires a battery having longer lifespan characteristics. Thus, research into a battery having longer lifespan characteristics needs to be continuously performed.

US2005/031957 discloses an electrode for a lithium ion battery having the composition $Si_xM_yAl_z$, wherein M is one or more metals but it does not disclose the value of the roughness of the silicon-based alloy.

WO2007/064531 discloses an electrode for a lithium ion battery having the composition $Si_{55}Al_{30}Fe_{15}$ but it does not disclose the value of the roughness of the silicon-based alloy.

[Technical Goal of the Invention]

An aspect of the present invention provides an electrode for a lithium secondary battery with improved lifespan characteristics, and a method of manufacturing the electrode.

Another aspect of the present invention provides a lithium secondary battery including the electrode.

[Structure of the Invention]

The present invention provides an electrode as claimed in claims 1 to 7 and a process for preparing the electrode as claimed in claims 8 to 11, as well as battery comprising said electrode as claimed in claim 12.

According to one or more embodiments of the present invention, an electrode for a lithium secondary battery includes a silicon-based alloy, and has a surface roughness of 1 to 10 $\mu$m and a surface roughness deviation of 5 or less $\mu$m.

According to one or more embodiments of the present invention, a method of manufacturing an electrode includes preparing a composition for forming an electrode active material layer by adding an active material, a conductive material, and a binder to a solvent, followed by wet mixing and milling; and coating and drying the composition on a current collector.

According to one or more embodiments of the present invention, a lithium secondary battery includes the electrode described above.

[Effects of the Invention]

According to embodiments of the present invention, electrodes for a lithium secondary battery are efficiently impregnated with an electrolytic solution and thus, a lithium secondary battery including such electrodes has improved efficiency, capacity retention rate and lifespan characteristics.

[Detailed Description of the Invention]

FIG. 1 is a diagram for explaining an electrolytic solution impregnation property of a negative electrode according to an embodiment of the present invention,

FIG. 2 is a schematic view of a lithium secondary battery according to an embodiment of the present invention,

FIG. 3 shows an electron scanning microscope image of a negative electrode manufactured by using a composition for forming a negative active material layer prepared according to Example 1,

FIG. 4 shows an electron scanning microscope image of a negative electrode manufactured by using a composition for forming a negative active material layer prepared according to Comparative Example 2,

FIG. 5 is a graph of an expansion ratio with respect to a volumetric capacity of electrodes manufactured according to Example 1 and Comparative Examples 1-4, and

FIG. 6 is a graph showing cycle characteristics of coin cells manufactured according to Manufacture Example 1 and Comparative Manufacture Examples 1, 2, 3, and 5.

An electrode for a lithium secondary battery, according to an embodiment of the present invention, comprises an electrode active material layer comprising a silicon-based alloy, wherein the electrode active material layer has a surface roughness of 0.5 to 12 $\mu$m and a surface roughness deviation of 5 $\mu$m or less.

An electrode for a lithium secondary battery, according to an embodiment of the present invention, includes a silicon-based alloy, and has a surface roughness of 1 to 10 $\mu$m and a surface roughness deviation of 5 or less $\mu$m.

In the prior art, a silicon-based alloy is typically used as an electrode active material, and to obtain high capacity, an silicon-based alloy having a high silicon content is used, and when an electrode is manufactured by using such a silicon-based alloy containing the high silicon content, a crystal size of the silicon-based alloy is increased and thus, the formed electrode may have an unduly larger surface roughness. Thus, an electrolytic solution impregnation property with respect to an electrode is reduced and accordingly, a solid electrolyte interface (SEI) is continuously formed on the surface of the electrode when silicon volumetrically expands, and a lithium secondary battery employing the electrode may have a decrease in an initial efficiency, and a substantial decrease of a capacity retention rate (C.R.R). As a result, the lithium secondary battery may have a decrease in the lifespan.

To overcome such problems, the inventors of the present invention appropriately controlled a silicon content and a mixed ratio of an active silicon and an inactive silicon in a silicon-based alloy and optimized mixing and milling conditions of the silicon-based alloy, a binder, and a conductive material when an electrode is manufactured by using a silicon-based alloy, so that the formed electrode had a surface roughness of 0.5 to 12 $\mu$m, preferably 1 to 10 $\mu$m, and a surface roughness deviation of 5 or less $\mu$m while the silicon-based alloy included the silicon content described above.

An amount of silicon in the silicon-based alloy may be in a range of 60 to 75 atom%, preferably 60 to 72 atom%. If the amount of the silicon in the silicon-based alloy is within this range, an electrode using the silicon-based alloy may have excellent surface roughness and roughness deviation characteristics.

The silicon that constitutes the silicon-based alloy may contain inactive silicon and active silicon which are mixed. The active silicon may directly affect a capacity of the silicon-based alloy, and the inactive silicon may have an inactive matrix structure and may suppress a volumetric expansion of the silicon-based alloy.

In an embodiment of the present invention, an amount of the active silicon may be in a range of 40 to 80 atom% based on 100 atom% of a total amount of the active silicon and the inactive silicon in the silicon-based alloy. If the amount of the active silicon is within this range, when an electrode including the active silicon is charged and discharged, a volumetric expansion of the silicon-based alloy may be efficiently suppressed and the electrode may have excellent capacity characteristics.

In an embodiment of the present invention, the silicon-based alloy has silicon particles dispersed within a silicon alloy-based matrix. In this embodiment, due to the structure and composition of the silicon-based alloy, when silicon particles expand during charging and discharging silicon, the silicon alloy-based matrix surrounding the silicon particles may efficiently control a volumetric change of silicon. Accordingly, when the silicon-based alloy is used as a negative active material, an expansion ratio of an electrode using the silicon-based alloy may be reduced during charging and discharging.

As described above, due to the decrease in the expansion ratio of an electrode during charging and discharging, a problem resulting from the expansion of the electrode, that is, a decrease in lifespan characteristics resulting from an increase irreversible capacity of lithium due to formation of an additional SEI film occurring when the silicon alloy-based matrix is destroyed may be prevented.

Also, the formed electrode may have the surface roughness and surface roughness deviation characteristics described above, and thus, the initial electrolytic solution impregnation property is improved and a deviation resulting from a local overpotential is reduced, and thus, a lifespan thereof is improved, and the battery manufacture yield may be increased.

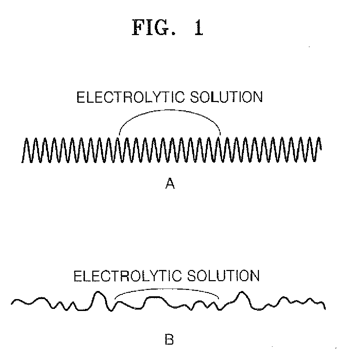

An electrode for a lithium secondary battery, according to an embodiment of the present invention, is described in detail below with reference to FIG. 1.

Referring to FIG. 1, A shows a case in which an electrode has a uniform surface roughness, and B shows a case in which a surface roughness deviation of the electrode is greater than that of the electrode of A.

Referring to FIG. 1, when the roughness of an electrode is uniformly controlled as illustrated in A, a specific surface area of an electrode surface is increased and thus, impregnation characteristics of an electrolytic solution are improved. When the impregnation characteristics of an electrolytic solution are improved, the silicon alloy matrix suppresses the formation of a SEI film and thus, the expansion of a negative electrode including a silicon alloy-based material after charging and discharging may be effectively suppressed.

When an electrode of which expansion after charging and discharging is suppressed as described above is used in manufacturing a lithium secondary battery, the formed lithium secondary battery may have improved initial efficiency, capacity retention rate, and lifespan characteristics.

In an embodiment of the present invention, a roughness standard deviation of the electrode may be, for example, 2 or less $\mu$m, for example, in a range of 0.1 to 2 $\mu$m.

The term "surface roughness" may be considered in evaluating levels of a pin hole or protrusion, mixed impurities, cracks, a strip pattern, a lump, etc, and refers to a surface roughness arithmetical mean value of an electrode.

A mixed density of an electrode according to an embodiment of the present invention may be in a range of 0.80 to 0.90 g/cm$^3$ (g/cc), preferably 0.83 to 0.88 g/cm$^3$ (g/cc).

The term "mixed density of an electrode" is calculated by dividing a weight of components (active material, conductive material, binder, etc.) other than a current collector in an electrode by a volume of the electrode. As the higher the mixed density of an electrode is, the lower the surface roughness of the electrode is.

When the mixed density of the electrode is within this range, surface roughness characteristics of the electrode are controlled within an appropriate range. Thus, when an electrode having such surface roughness characteristics is employed, lifespan of a formed lithium secondary battery may be improved.

In the present invention, the silicon-based alloy includes silicon, one or more metals selected from aluminum (Al), nickel (Ni), iron (Fe), manganese (Mn), and titanium (Ti).

In an embodiment of the present invention, the silicon-based alloy may be represented by, for example, silicon-M-A alloy. M and A are different from each other, and M may be, for example, aluminum (Al), titanium (Ti), or iron(Fe) and A may be, for example, nickel (Ni), iron (Fe), or manganese (Mn).

An amount of Si in the silicon-M-A alloy may be 55 to 75 atom%, preferably 60 to 75 atom%, and more preferably 60 to 72 atom%. Optionally, for example, 65 to 70 atom %.

An amount of M may be in a range of 5 to 25 atom%, preferably 7 to 20 atom%. Optionally, an amount of 7 to 18 atom% or 12 to 20 atom%.

An amount of A may be in a range of 10 to 25 atom%; preferably 15 to 24 atom%. Optionally, 15 to 20 atom%.

In a preferred embodiment, the silicon-based alloy is represented by silicon-M-A and the amount of silicon is in a range of 60 to 75 atom%, M may be in a range of 5 to 25 atom%, and an amount of A may be in a range of 10 to 25 atom%.

The silicon-based alloy may be, for example, $Sl_{68}Al_8Ni_{24}$, $Si_{60}Ti_{20}Ni_{20}$, $Si_{70}Fe_{15}Mn_{15}$, $Si_{70}Al_{15}Fe_{15}$, $Si_{70}Al_{15}Mn_{15}$, $Si_{70}Ti_{15}Fe_{15}$, $Si_{65}Ti_{17.5}Ni_{17.5}$, or $Si_{68}Ti_{16}Ni_{16}$.

In an embodiment of the present invention, the surface roughness is measured on the silicon-based alloy. In an embodiment of the present invention, the electrode active material layer does not contain a coating layer on the silicon-based alloy, i.e. a surface of the electrode active material layer is the silicon-based alloy. In an embodiment of the present invention the electrode active material layer is a mono-layer comprising the silicon-based alloy.

Hereinafter, a method of manufacturing a silicon-based alloy-containing electrode for a lithium secondary battery is described in detail below.

The present invention provides a process for preparing the electrode for a lithium secondary battery as described above, the process comprising:

mixing a solvent and an electrode active material comprising a silicon-based alloy and optionally a conductive material and optionally a binder, to make an electrode composition;
milling the electrode composition to form a milled electrode composition;
coating the milled electrode composition on to a current collector; and
drying the milled electrode composition to form the electrode.

In an embodiment of the present invention, the electrode active material in the milled electrode composition has an average particle diameter of 10 $\mu$m or smaller.

In an embodiment of the present invention, the mixing comprises:

first loading the solvent into a milling machine;
after loading the solvent into the milling machine, adding the electrode active material, the conductive material and the binder to the milling machine.

In an embodiment of the present invention, the mixing and milling is carried out at a revolution per minute of between 750 to 2500 rpm, optionally 1000 to 2000 rpm, and the mixing and milling is between 15 minutes and 1 hour in duration, optionally 20 minutes to 45 minutes.

In an embodiment of the present invention, the milling is carried out in a bead mill including beads and the beads have an average particle diameter between 0.25 mm and 3 mm, optionally 0.5 to 2 mm.

In an embodiment of the present invention" wherein the drying is performed at a temperature of 100 to 150 °C, optionally 120 to 140°C, optionally for a period of between 2 and 6 hours.

Conditions for mixing a silicon-based alloy, a conductive material, and a binder may significantly affect surface roughness characteristics of a finally obtained electrode.

According to an embodiment of the present invention, a composition for forming an electrode active material layer, including a silicon-based alloy as an electrode active material, a conductive material, and a binder, may be prepared as below.

Regarding the mixing of a silicon-based alloy, optionally a conductive material, and optionally a binder which constitute a composition for forming an electrode active material layer, a solvent is loaded into a milling machine to prepare a liquid condition and then, an active material, optionally a conductive material, and optionally a binder are added thereto, followed by mixing. In an embodiment, the adding sequence of the active material, the conductive material, and the binder may not be particularly restricted, and for example, the active material is first added and then the conductive material and the binder are added. By doing so, pulverizing of the active material into too small particles may be suppressed.

In an embodiment, the mixing of the active material, optionally the conductive material, and optionally the binder may be performed by wet mixing and milling in a liquid condition. Through the wet mixing and milling, oxidation of the active material, the conductive material, and the binder may be prevented and also, a particle diameter of the active material may be controlled to be 12 or less $\mu$m, for example, in a range of 10 or less $\mu$m or 1 to 7 $\mu$m. If the particle diameter of the active material is controlled to be within this range, problems resulting from volumetric expansion of silicon-based particles during charging and discharging may be prevented, and also, surface characteristics of the active material may be optimized so that the surface of the active material is uniformly wet with an electrolytic solution.

In an embodiment of the present invention, when the particle diameter of the active material is controlled to be 10 or less $\mu$m and surface characteristics of the active material is controlled as described above, a formed electrode may have a surface roughness of 0.5 to 12 $\mu$m, preferably 1 to 10 $\mu$m, and a surface roughness deviation of 5 or less $\mu$m. Thus, pulverizing of an electrode active material into too small particles or damages on the electrode active material may be effectively suppressed during pressing performed in manufacturing an electrode and during charging and discharging of a lithium secondary battery employing the electrode.

In an embodiment of the present invention, the solvent may be N-methylpyrrolidone (NMP), pure water, or the like.

In an embodiment of the present invention, the amount of the solvent may be determined such that a solid content in the composition is in a range of 30 to 60 wt%, preferably 30 to 50 wt%, more preferably 40 to 50 wt%. If the amount of the solvent is within this range, the particle diameter of the active material may be controlled to be 10 $\mu$m or less, and the components of the composition have excellent dispersion properties, enabling an active material layer to be easily formed.

In an embodiment of the present invention, as a milling machine for wet mixing and milling, for example, a bead mill may be used. When a bead mill is used, the silicon-based alloy as an active material, the conductive material (if present), and the binder (if present) are milled into appropriate particle sizes and are uniformly dispersed. Thus, a formed electrode may have excellent surface roughness characteristics.

If the particle diameter of an active material is controlled to be 12 $\mu$m or less, preferably 10 $\mu$m or less as described above, pulverizing of the silicon-based alloy as the active material into too small particles during charging and discharging and/or during pressing of an electrode may be prevented.

In an embodiment of the present invention, the wet mixing and milling is performed using beads, and an average particle size of beads may be in a range of, for example, 0.25 mm and 3 mm, optionally 0.5 to 2 mm, and a revolution per minute of the milling machine may be in a range of, for example, 1000 to 2000 rpm. When the particle diameter of beads and the revolution per minute of the mill are within the ranges described above, respectively, the prepared composition may have excellent dispersibility and pulverizing of the active material into too small particles may be prevented.

Non-limiting examples of the beads are zirconia beads and alumina beads.

The result that has been subjected to the wet-mixing and milling is coated on an electrode current collector, followed by drying and pressing to complete the manufacture of an electrode.

In an embodiment, the drying may be performed at the temperature of 100 to 150 °C, for example, optionally 120 to 140°C or 100 to 110°C.

In an embodiment, the drying may be performed for a period of between 2 and 6 hours, preferably 3 hours to 5 hours.

The electrode active material may be, for example, a negative active material, and the electrode may be, for example, a negative electrode.

A negative active material may include, as a necessary element, the silicon-based alloy described above and may further include other negative active materials (negative active materials A) that are typically used in a lithium secondary battery.

As a material that constitutes the negative active material may be graphite that may intercalate or deintercalate lithium ions, a carbonaceous material, such as carbon, lithium metal, an alloy thereof, a silicon oxide-based material, a mixture thereof, or the like.

According to an embodiment of the present invention, the negative active material may include the silicon-based alloy and a carbonaceous material, wherein the carbonaceous material is graphite, or pitch that is amorphous carbon.

When the carbonaceous material is used together with the silicon-based alloy as described above, an oxidation reaction of the silicon-based alloy as the active material is suppressed and an SEI film may be stably and effectively formed and also, electric conductivity may also be increased to further improve charging and discharging characteristics of lithium.

When the carbonaceous material is used, for example, the carbonaceous material may be coated on a surface of the silicon-based alloy as an active material.

An amount of the negative active materials A may be in a range of 1 to 99 parts by weight based on 100 parts by weight of a total amount of the silicon-based alloy and the negative active materials A.

If the negative active material includes the silicon-based alloy as a major component, an amount of the silicon-based alloy may be, for example, in a range of 95 to 99 parts by weight based on 100 parts by weight of a total amount of the negative active materials A and the silicon-based alloy. When graphite or pitch that is amorphous carbon is used as the negative active materials A, the graphite or pitch may be coated on the surface of the silicon-based alloy.

If the negative active material includes the silicon-based alloy as a minor component, an amount of the silicon-based alloy may be, for example, in a range of 1 to 5 parts by weight based on 100 parts by weight of a total amount of the negative active materials A and the silicon-based alloy. When graphite or pitch that is amorphous carbon is used as the negative active materials A, the graphite or pitch may function as a buffer for the silicon-based alloy and thus the lifespan of a formed electrode may be further increased.

The binder is used in an amount of 1 to 15 parts by weight based on 100 parts by weight of a total weight of the negative active material, optionally 1 to 10 parts, optionally 5 to 9 parts. Examples of the binder are polyvinylidenefluoride, polyvinylalcohol, carboxymethylcellulose (CMC), starch, hydroxypropylcellulose, regenerated cellulose, polyvinylpyrrolidone, polyamide imide, polyethylene, polypropylene, ethylene-propylene-diene terpolymer (EPDM), sulfonated EPDM, styrene butadiene rubber, fluoride rubber, and a vinylidene fluoride copolymer having one or more functional groups selected from a carboxylic group, an epoxy group, a hydroxyl group, and a carbonyl group.

When the amount of the binder is within this range, a binding force of the electrode active material with respect to the current collector is further enhanced and thus, an electrode and a battery with improved lifespan and stability may be manufactured.

The conductive material may be used in an amount of 1 to 10 parts by weight based on 100 parts by weight of a total weight of the negative active material, optionally 2 to 7 parts. When the amount of the conductive material is within this range, a formed electrode may have excellent conductivity characteristics.

The conductive material may not be particularly limited and may be any one of various materials that do not cause any chemical change in a corresponding battery and have conductivity, and examples thereof are graphite such as natural or artificial graphite; a carbonaceous material, such as carbon black, acetylene black, Ketjen black, channel black, furnace black, lamp black, and thermal black; conductive fibers such as carbon fibers and metallic fibers; fluoride carbon; metal powder, such as aluminum or nickel powder; conductive whiskers such as zinc oxide and potassium titanate; conductive metal oxides such as titanium oxide; and a conductive material, such as polyphenylene derivative.

A negative electrode current collector may have a thickness of, in general, 3 to 500 $\mu$m. A material for forming the negative electrode current collector may not be particularly limited and may be any one of various materials that do not cause any chemical change in a corresponding battery and have conductivity. Examples of such a material are copper; stainless steel; aluminum, nickel; titanium; heat treated carbon; copper and stainless steel, each of which has a surface coated with carbon, nickel, titanium, or silver; and an aluminum-cadmium alloy. Also, like a positive electrode current collector, the negative electrode current collector may have a uneven surface to increase a binding force with respect to a negative active material, and may be used in a film form, a sheet form, a foil form, a net form, a porous form, a foam form, a non-woven fabric form, or the like.

Hereinafter, a method of manufacturing a lithium secondary battery using the negative electrode is described below in detail. A lithium secondary battery according to an embodiment of the present invention includes, for example, a positive electrode, a negative electrode, a lithium salt-containing non-aqueous electrolyte, and a separator.

EP 2 631 973 B1

First, a positive active material, a conductive material, a binder, and a solvent are mixed to prepare a composition for forming a positive active material layer, and the composition is coated on a current collector, followed by drying, to complete the manufacture of a positive electrode.

As a positive active material, a lithium transition metal oxide that is typically used in a lithium secondary battery may be used.

As a lithium transition metal active material, at least one of $LiCoO_2$, $LiNiO_2$, $LiMnO_2$, $LiMn_2O_4$, $Li(Ni_aCo_bMn_c)O_2(0 < a < 1, 0 < b < 1, 0 < c < 1, a+b+c=1)$, $LiNi_{1-y}Co_yO_2(0 \leq y < 1)$, $LiCo_{1-y}Mn_yO_2(0 \leq y < 1)$, $LiNi_{1-y}Mn_yO_2(0 \leq < 1)$, $LiMn_{2-z}Ni_zO_4(0 < z < 2)$, $LiMn_{2-z}Co_zO_4(0 < z < 2)$, $LiCoPO_4$, and $LiFePO_4$ may be used.

The binder and the conductive material may be the same type and amount as those used in manufacturing the negative electrode.

The solvent may be N-methylpyrrolidone, pure water, or the like.

An amount of the solvent may be in a range of 1 to 500 parts by weight based on 100 parts by weight of the positive active material. If the amount of the solvent is within this range, an active material layer may be easily formed.

A positive electrode current collector may have a thickness of 3 to 500 $\mu$m, and may be any one of various materials that any one of various materials that do not cause any chemical change in a corresponding battery and have conductivity. Examples of such a material are stainless steel; aluminum; nickel; titanium; heat treated carbon; and aluminum and stainless steel, each of which has a surface coated with carbon, nickel, titanium, or silver; and an aluminum-cadmium alloy. The positive electrode current collector may have an uneven surface to increase a binding force with respect to a positive active material, and may be used in a film form, a sheet form, a foil form, a net form, a porous form, a foam form, a non-woven fabric form, or the like.

A separator is interposed between the positive electrode and the negative electrode manufactured as described above.

The separator may have a porous diameter of 0.01 to 10 $\mu$m, and a thickness of, in general, 5 to 300 $\mu$m. The separator may be formed of, for example, an olefin-based polymer, such as polypropylene, polyethylene, or the like; or a sheet or non-woven fabric formed of glass fiber. If a solid electrolyte, such as a polymer, is used as an electrolyte, the solid electrolyte may also function as the separator.

The lithium salt-containing non-aqueous electrolyte may include a non-aqueous organic solvent and a lithium salt. The non-aqueous electrolyte may be a non-aqueous electrolytic solution, an organic solid electrolyte, an inorganic solid electrolyte, or the like.

Non-limiting examples of the non-aqueous organic solvent are N-methyl-2-pyrrolidinone, propylene carbonate, ethylene carbonate, butylene carbonate, dimethyl carbonate, diethyl carbonate, gamma-butyloractone, 1,2-dimethoxy ethane, 2-methyl tetrahydrofurane, N,N-dimethylsulfoxide, 1,3-dioxolane, N,N-formamide, N,N-dimethylformamide, acetonitrile, nitromethane, methyl formate, methyl acetate, trimester phosphate, trimethoxy methane, 1,4-dioxorane, sulfolane, methyl sulforane, 1,3-dimethyl-2-imidazolidinone, propylene carbonate, tetrahydrofurane, ether, methyl propionate, and ethyl propionate.

Non-limiting examples of the organic solid electrolyte are polyethylene, a polyethylene oxide, a polypropylene oxide, an ester phosphate polymer, polyestersulfide, polyvinyl alcohol, and polyvinylidene fluoride.

Non-limiting examples of the inorganic solid electrolyte are $Li_3N$, LiI, $Li_5NI_2$, $Li_3N$-LiI-LiOH, $Li_2SiS_3$, $Li_4SiO_4$, $Li_4SiO_4$-LiI-LiOH, and $Li_3PO_4$-$Li_2S$-$SiS_2$.

The lithium salt may be a material that has high solubility to the non-aqueous organic solvent, and non-limiting examples of the lithium salt are LiCI, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, and $(CF_3SO_2)_2NLi$.

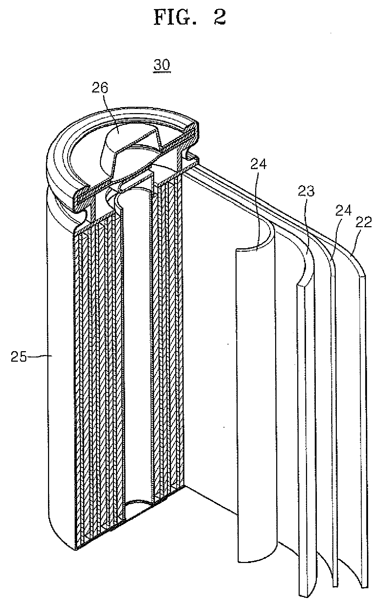

FIG. 2 is a schematic view of a lithium secondary battery 30 according to an embodiment of the present invention.

Referring to FIG. 2, the lithium secondary battery 30 includes a positive electrode 23, a negative electrode 22, and a separator 24 disposed between the positive electrode 23 and the negative electrode 22, an electrolyte (not shown) with which the positive electrode 23, the negative electrode 22, and the separator 24 are impregnated, a battery case 25, and an encapsulation member 26 sealing the battery case 25. The negative electrode 22 may be the negative electrode according to an embodiment of the present invention described above.

To manufacture the lithium secondary battery 30, the positive electrode 23, the negative electrode 22, and the separator 24 are sequentially stacked and then the stack is rolled in a jelly roll form and then placed in the battery case 25.

One or more embodiments of the present invention will now be described in detail with reference to the following examples. However, the examples do not limit the scope of the claims.

Example 1: Manufacture of negative electrode

NMP was loaded into a bead mill (LabStar manufactured by NETZSCH Company) to prepare a liquid condition, and a silicon-based alloy $(Si_{68}Al_8Ni_{24})$(the content of active silicon: about 79.4 atom%) as an active material, Ketjen black as a conductive material, and polyamide imide (PAI) as a binder were sequentially added thereinto at a weight ratio of 88:4:8, and wet mixing and milling were performed thereon by using the bead mill at a revolution per minute of about 1000 rpm for about 30 minutes to prepare a composition for a negative active material layer. Beads employed by the bead mill had a diameter of about 0.5 mm and NMP was used in such an amount that a total solid content in the composition was 48 wt%.

The composition was coated on a copper foil to form a film having a thickness of about 14 $\mu$m, thereby forming a thin electrode, and then, the thin electrode was dried at the temperature of about 135°C°C for 3 or more hours, followed by pressing, thereby completing the manufacture of a negative electrode.

Example 2: Manufacture of negative electrode

A negative electrode was manufactured in the same manner as in Example 1, except that silicon-based alloy ($Si_{60}Ti_{20}Ni_{20}$) (the content of active silicon: about 41.7 atom%) was used instead of silicon-based alloy ($Si_{68}Al_8Ni_{24}$).

Example 3: Manufacture of negative electrode

A negative electrode was manufactured in the same manner as in Example 1, except that a diameter of beads employed by the bead mill was about 2 mm and the revolution per minute of the bead mill was about 2000 rpm.

Example 4: Manufacture of negative electrode

A negative electrode was manufactured in the same manner as in Example 1, except that the composition was prepared by using silicon-based alloy($Si_{65}Ti_{17.5}Ni_{17.5}$)(the content of active silicon: about 52.9 atom%) instead of silicon-based alloy ($Si_{68}Al_8Ni_{24}$).

Example 5: Manufacture of negative electrode

A negative electrode was manufactured in the same manner as in Example 1, except that the composition was prepared by using silicon-based alloy ($Si_{68}Ti_{16}Ni_{16}$)(the content of active silicon: about 58.8 atom%) instead of the silicon-based alloy($Si_{68}Al_8Ni_{24}$).

Comparative Example 1: Manufacture of negative electrode

A negative electrode was manufactured in the same manner as in Example 1, except that the composition was prepared as follows.

A silicon-based alloy ($Si_{68}Al_8Ni_{24}$) as an active material, Ketjen black as a conductive material, and PAI as a binder were loaded into a paint shaker at a weight ratio of 88:4:8, followed by 30 minutes of dry mixing. Then, NMP was added to and mixed with the dried product to complete the preparation of the composition.

In this regard, an amount of NMP included in the composition was controlled such that a total solid content of the composition was 48 wt%.

Comparative Example 2: Manufacture of negative electrode

A negative electrode was manufactured in the same manner as in Example 1, except that the composition was prepared as follows.

A silicon-based alloy ($Si_{68}Al_8Ni_{24}$) as an active material and Ketjen black as a conductive material were loaded into a Thinky mixer, followed by 30 minutes of dry mixing. Then, NMP and PAI as a binder were added to and mixed with the dried product, and then the result was mixed by using a bead mill for 30 minutes to complete the preparation of the composition.

Comparative Examples 3: Manufacture of negative electrode

A negative electrode was manufactured in the same manner as in Example 1, except that the composition was prepared as follows.

A silicon-based alloy ($Si_{68}Al_8Ni_{24}$) as an active material and Ketjen black as a conductive material were loaded into a paint shaker, followed by 30 minutes of dry mixing. Then, NMP and PAI as a binder were added to and mixed with the dried product, and then the result was mixed by using a bead mill for 30 minutes to complete the preparation of the composition.

Comparative Example 4: Manufacture of negative electrode

A negative electrode was manufactured in the same manner as in Example 2, except that the composition was prepared as follows.

A silicon-based alloy as an active material, Ketjen black as a conductive material, and PAI as a binder were loaded into a paint shaker at a weight ratio of 88:4:8, followed by 30 minutes of dry mixing, and then, NMP was added thereinto and mixed to complete the preparation of the composition.

An amount of NMP included in the composition was controlled such that a total solid content of the composition was 48 wt%.

Comparative Example 5: Manufacture of negative electrode

A negative electrode was manufactured in the same manner as in Example 4, except that the composition was prepared as follows.

A silicon-based alloy as an active material, Ketjen black as a conductive material, and PAI as a binder were loaded into a paint shaker at a weight ratio of 88:4:8, followed by 30 minutes of dry mixing, and then, NMP was added thereinto and mixed to complete the preparation of the composition.

An amount of NMP included in the composition was controlled such that a total solid content of the composition was 48 wt%.

Comparative Example 6: Manufacture of negative electrode

A negative electrode was manufactured in the same manner as in Example 5, except that the composition was prepared as follows.

A silicon-based alloy as an active material, Ketjen black as a conductive material, and PAI as a binder were loaded into a Thinky mixer at a weight ratio of 88:4:8, followed by 30 minutes of dry mixing, and then, NMP was added thereinto and mixed to complete the preparation of the composition.

An amount of NMP included in the composition was controlled such that a total solid content of the composition was 48 wt%.

Manufacture Example 1: Manufacture of Coin Cell

A negative electrode was manufactured in the same manner as in Example 1, except that the composition was prepared as follows.

A CR-2016 standard coin cell was manufactured by using the negative electrode, lithium metal as a reference electrode, a polypropylene separator (Cellgard 3510), and an electrolyte in which 1.3M $LiPF_6$ was dissolved in a mixture including ethylene carbonate (EC) and diethyl carbonate (DEC)(at a weight ratio of 3:7).

Manufacture Examples 2-5: Manufacture of coin cells

A coin cell was manufactured in the same manner as in Manufacture Example 1, except that the negative electrodes manufactured according to Examples 2-5 were used instead of the negative electrode manufactured according to Example 1.

Comparative Manufacture Examples 1-6: Manufacture of coin cells

A coin cell was manufactured in the same manner as in Manufacture Example 1, except that the negative electrodes manufactured according to Comparative Examples 1-6 were used instead of the negative electrode manufactured according to Example 1.

Evaluation Example 1: Electron scanning microscope analysis

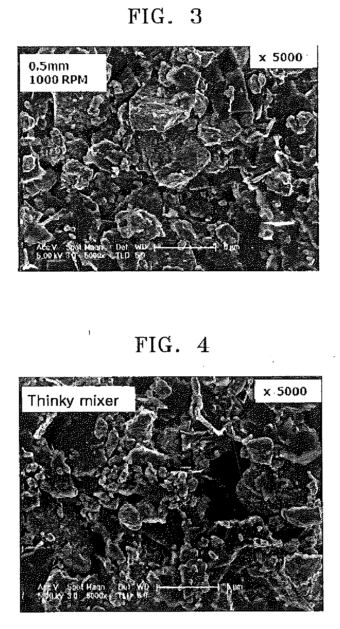

The negative electrodes manufactured according to Example 1 and Comparative Example 2 were analyzed through a electron scanning microscope, and results thereof are shown in FIG. 3 and FIG. 4. In this regard, the negative electrodes are electrodes that were not yet pressed following the coating and drying of the compositions on a current collector.

Referring to FIG. 4, in the case of the negative electrode of Comparative Example 2, it was confirmed that the active material was divided into too small particles. On the other hand, referring to FIG. 3, in the case of the negative electrode of Example 1, it was confirmed that the active material was not divided into too small particles due to the wet mixing and milling process using a bead mill.

Evaluation Example 2: Surface roughness of negative electrode

Surface roughness and roughness deviation of surfaces of the negative electrodes of Example 1-5 and Comparative Examples 1-6 were specified and shown in Table 1 below.

The surface roughness of a negative electrode is a surface roughness after a negative electrode was pressed. The surface roughness was measured as follows.

The negative electrodes of Example 1-5 and Comparative Examples 1-6 were cut to collect samples, and the samples were scanned (scan interval: about 2.5mm, and scan range: about 25 mm) 9 times by using a non-contact laser surface analyzer (usurf custom manufactured by NanoFocus AG Company) to obtain surface roughness mean values and surface deviations values. The surface roughness mean values and the surface deviations mean values were used as surface roughness values and surface deviations, respectively.

[Table 1]

|  | Surface roughness ($\mu$m) | Roughness deviation ($\mu$m) |
|---|---|---|
| Example 1 | 8.89 | 1.85 |
| Example 2 | 9.93 | 1.09 |
| Example 3 | 10.00 | 1.09 |
| Example 4 | 9.74 | 1.41 |
| Example 5 | 1.00 | 0.26 |
| Comparative Example 1 | 13.20 | 3.23 |
| Comparative Example 2 | 12.10 | 4.33 |
| Comparative Example 3 | 14.23 | 5.65 |
| Comparative Example 4 | 14.93 | 6.04 |
| Comparative Example 5 | 14.68 | 1.72 |
| Comparative Example 6 | 18.43 | 4.05 |

Referring to Table 1, it was confirmed that the negative electrodes of Examples 1-5 had smaller and more uniform surface roughness than the negative electrodes of Comparative Examples 1-6.

Evaluation Example 3: Mixed density and current density of negative electrode

The mixed density and current density of the negative electrodes of Example 1 and Comparative Examples 1-4 were measured and results thereof are shown in Table 2 below.

(1) Mixed density

A mixed density was measured by dividing a weight of components active material, conductive material, binder, etc.) other than a current collector in a negative electrode by a volume of the electrode.

[Table 2]

|  | Active material loading amount (mg/cm²) | Mixed density (g/cm³ (g/cc)) | Current density (mA/cm²) | Measured Capacity (mAh/g) |
|---|---|---|---|---|
| Example 1 | 2.87 | 0.85 | 3.14 | 1236.6 |
| Comparative Example 1 | 3.06 | 0.93 | 2.85 | 1060.6 |
| Comparative Example 2 | 3.55 | 0.91 | 2.84 | 914.1 |

(continued)

| | Active material loading amount (mg/cm$^2$) | Mixed density (g/cm$^3$ (g/cc)) | Current density (mA/cm$^2$) | Measured Capacity (mAh/g) |
|---|---|---|---|---|
| Comparative Example 3 | 3.14 | 0.97 | 2.85 | 1035.6 |
| Comparative Example 4 | 3.95 | 0.94 | 2.85 | 823.3 |

Referring to Table 2, it was confirmed that the negative electrode of Example 1 had a higher current density than the negative electrodes of Comparative Examples 1-4.

Evaluation Example 4. Volumetric capacity and expansion ratio of negative electrode

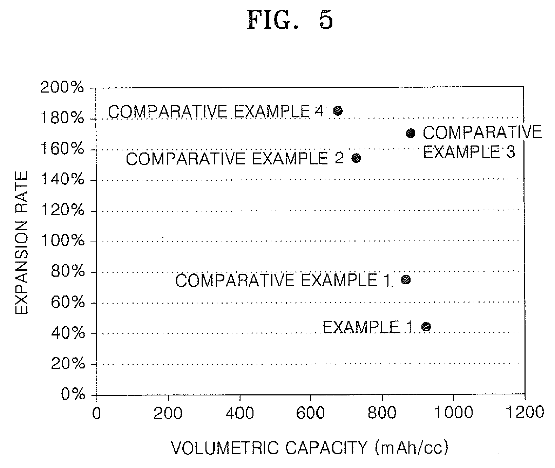

The volumetric capacity, expansion ratio, and volumetric capacity in consideration of expansion of the negative electrodes of Example 1 and Comparative Examples 1-4 were measured and results thereof are shown in FIG. 5 and Table 3 below. The volumetric capacity, the expansion ratio, and the volumetric capacity in consideration of expansion were evaluated as follows.

(1) Volumetric capacity

Volumetric capacity was measured according to Equation 1 below.

[Equation 1]

Volumetric capacity= {(a weight ratio of a negative active material to a negative active material composition) x measured capacity (mAh/g) x mixed density (g/cm$^3$ (g/cc))}

(2) Expansion ratio

The coin cells manufactured according to Manufacture Example 1 and Comparative Manufacture Examples 1-4 including the negative electrodes of Example 1 and Comparative Examples 1-4 were charged at a rate of 0.1C, and then the coin cells were dissembled in a dry room. An increase level of the height of each of the negative electrodes included in the dissembled coin cells was measured and expansion ratios of the negative electrodes were calculated according to Equation 2 below.

[Equation 2]

Expansion ratio = {negative electrode thickness after expansion/ (initial negative electrode thickness}×100

(3) Volumetric capacity in consideration of expansion

The volumetric capacity and expansion ratio were calculated according to Equation 3 below.

[Equation 3]

Volumetric capacity in consideration of expansion=volumetric capacity/(1+(expansion ratio ×0.01))

[Table 3]

|  | Volumetric capacity (mAh/CC) | Expansion ratio (%) | Volumetric capacity in consideration of expansion (mAh/CC) |
|---|---|---|---|
| Example 1 | 925 | 44 | 642 |
| Comparative Example 1 | 868 | 75 | 496 |
| Comparative Example 2 | 732 | 154 | 288 |
| Comparative Example 3 | 884 | 170 | 327 |
| Comparative Example 4 | 681 | 185 | 239 |

Referring to Table 3 and FIG. 5, it was confirmed that the negative electrode of Example 1 had a lower expansion ratio and a higher volumetric capacity in consideration of expansion than negative electrodes of Comparative Examples 1-4.

Evaluation Example 5: Charging and discharging test

Initial charge efficiency (I.C.E) and discharge capacity of the coin cells manufactured according to Manufacture Example 1 and Comparative Manufacture Examples 1-4 were measured and results thereof are shown in Table 4 below.
First, the coin cells of Manufacture Example 1 and Comparative Manufacture Examples 1-4 were charged and discharged once at 0.1C to perform a formation process and thereafter, charging and discharging was performed once at 0.2C to identify initial charging and discharging characteristics, and then at 1 C, charging and discharging were repeatedly performed 100 times to identify cycle characteristics. Charging was set in such a way that charging begins in a constant current (CC) mode and then the mode is changed into a constant voltage (CV) mode and cut-off occurs at 0.01C, and discharging was set in such a way that cut-off occurs at 1.5V in the CC mode.

(1) Initial charging and discharging efficiency

The initial charging and the discharging efficiency were measured according to Equation 4 below.

<Equation 4>

Initial charging and discharging efficiency [%]=[1st cycle discharge capacity/1st cycle charge capacity ]×100

(2) Discharge capacity

A discharge capacity after the charging in the first cycle and a discharge capacity after the charging in the second cycle were measured.

[Table 4]

|  | I.C.E (%) | discharge capacity (mAh/g) | |
|---|---|---|---|
|  |  | 1st cycle | 2nd cycle |
| Manufacture Example 1 | 87.0 | 1274 | 1288 |
| Comparative Manufacture Example 1 | 81.9 | 997 | 1009 |
| Comparative Manufacture Example 2 | 75.3 | 930 | 900 |
| Comparative Manufacture Example 3 | 82.3 | 1119 | 1100 |

(continued)

| | I.C.E (%) | discharge capacity (mAh/g) | |
|---|---|---|---|
| | | 1st cycle | 2nd cycle |
| Comparative Manufacture Example 4 | 69.3 | 845 | 840 |

Referring to Table 4, it was confirmed that the lithium secondary battery of Manufacture Example 1 had improved I.C.E. and discharge capacity compared to the lithium secondary batteries of Comparative Manufacture Examples 1-4.

Evaluation Example 6: Cycle lifespan

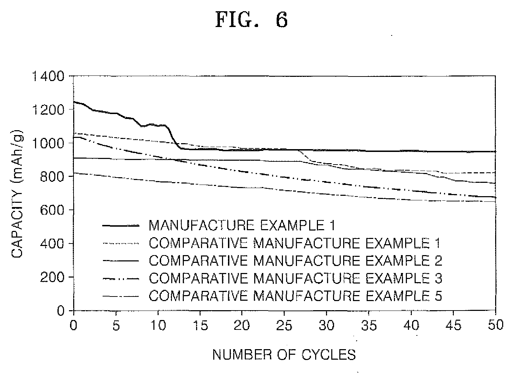

First, the coin cells of Manufacture Example 1 and Comparative Manufacture Examples 1, 2, 3, and 5 were charged and discharged once at 0.1C to perform a formation process and thereafter, charging and discharging was performed once at 0.2C to identify initial charging and discharging characteristics, and then at 1C, charging and discharging were repeatedly performed 100 times to identify cycle characteristics. Charging was set in such a way that charging begins in a constant current (CC) mode and then the mode is changed into a constant voltage (CV) mode and cut-off occurs at 0.01C, and discharging was set in such a way that cut-off occurs at 1.5V in the CC mode.
Discharge capacity change with respect to the cycle was evaluated and evaluation results are shown in FIG. 6.
Referring to FIG. 6, it was confirmed that the lithium secondary battery of Manufacture Example 1 had better cycle lifespan characteristics than the lithium secondary batteries of Comparative Manufacture Examples 1, 2, 3 and 5.

Evaluation Example 7: Lifespan characteristics

First, the coin cells of Manufacture Examples 2, 4, 5 and Comparative Manufacture Examples 2, 5 and 6 were charged and discharged once at 0.1C to perform a formation process and thereafter, charging and discharging was performed once at 0.2C to identify initial charging and discharging characteristics, and then at 1C, charging and discharging were repeatedly performed 100 times to identify cycle characteristics. Charging was set in such a way that charging begins in a constant current (CC) mode and then the mode is changed into a constant voltage (CV) mode and cut-off occurs at 0.01C, and discharging was set in such a way that cut-off occurs at 1.5Vin the CC mode.
A capacity retention rate in the 100th cycle is represented by Equation 5 below, and results thereof are shown in Table 5.

<Equation 5>

$$\text{Capacity retention rate in } 100^{th} \text{ cycle } [\%] = [\text{discharge capacity in } 100^{th} \text{ cycle} / \text{discharge capacity in } 1^{st} \text{ cycle}] \times 100$$

[Table 5]

| | Capacity retention rate (%) |
|---|---|
| Manufacture Example 2 | 90.8 |
| Manufacture Example 4 | 87.1 |
| Manufacture Example 5 | 86.9 |
| Comparative Manufacture Example 2 | 76.0 |
| Comparative Manufacture Example 5 | 74.2 |
| Comparative Manufacture Example 6 | 73.4 |

Referring to Table 5, it was confirmed that the coin cells of Manufacture Examples 2, 4 and 5 had higher capacity retention rate than the coin cells of Comparative Manufacture Examples 2, 5, and 6.
It should be understood that the embodiments described herein should be considered in a descriptive sense only and not for purposes of limitation. Descriptions of features or aspects within each embodiment should typically be considered as available for other similar features or aspects in other embodiments.

**Claims**

1. An electrode for a lithium secondary battery comprising an electrode active material layer comprising a silicon-based alloy, wherein the electrode active material layer has a surface roughness of 0.5 to 12 $\mu$m and a surface roughness deviation of 5 $\mu$m or less, wherein the silicon-based alloy includes silicon, one or more metal selected from aluminum (Al), nickel (Ni), iron (Fe), manganese (Mn), and titanium (Ti), optionally the silicon-based alloy is represented by silicon-M-A, M and A are different from each other, and M is aluminum (Al), titanium (Ti), or iron (Fe) and A is nickel (Ni), iron (Fe), or manganese (Mn).

2. An electrode of claim 1, wherein the surface roughness deviation is 2 $\mu$m or less, optionally in a range of 0.1 to 2 $\mu$m.

3. An electrode of claim 1 or claim 2, wherein the surface roughness is 1 to 12 $\mu$m, optionally 1 to 10 $\mu$m or 7 to 10 $\mu$m.

4. An electrode of any of claims 1 to 3, wherein the silicon-based alloy is represented by silicon-M-A and the amount of silicon is in a range of 60 to 75 atom%, M may be in a range of 5 to 25 atom%, and an amount of A may be in a range of 10 to 25 atom%.

5. An electrode of any of claims 1 to 4, wherein the silicon-based alloy is selected from the group consisting of $Si_{68}Al_8Ni_{24}$, $Si_{60}Ti_{20}Ni_{20}$, $Si_{70}Fe_{15}Mn_{15}$, $Si_{70}Al_{15}Fe_{15}$, $Si_{70}Al_{15}Mn_{15}$, $Si_{70}Ti_{15}Fe_{15}$, $Si_{65}Ti_{17.5}Ni_{17.5}$, or $Si_{68}Ti_{16}Ni_{16}$ and a combination thereof.

6. An electrode of any of claims 1 to 5, wherein the density of the electrode is in a range of 0.80 to 0.90 g/cm$^3$ (g/cc).

7. An electrode of any of claims 1 to 6, wherein the silicon-based alloy comprises active silicon and inactive silicon, and the amount of the active silicon is 40 atom% to 80 atom% based on a total amount of the active silicon and the inactive silicon in the silicon-based alloy.

8. A process for preparing the electrode for a lithium secondary battery of any of claims 1 to 7, the process comprising:

    mixing a solvent and an electrode active material comprising a silicon-based alloy and optionally a conductive material and optionally a binder, to make an electrode composition;
    milling the electrode composition to form a milled electrode composition;
    coating the milled electrode composition on to a current collector; and
    drying the milled electrode composition to form the electrode, wherein the mixing comprises:

        first loading the solvent into a milling machine;
        after loading the solvent into the milling machine, adding the electrode active material, the conductive material and the binder to the milling machine and the electrode active material in the milled electrode composition has an average particle diameter of 10 $\mu$m or smaller.

9. The process of claim 8, wherein the mixing and milling is carried out at a revolution per minute of between 750 to 2500 rpm, optionally 1000 to 2000 rpm, and the mixing and milling is between 15 minutes and 1 hour in duration, optionally 20 minutes to 45 minutes.

10. The process of any of claims 8 to 9, wherein the milling is carried out in a bead mill including beads and the beads have a average particle diameter between 0.25 mm and 3 mm, optionally 0.5 to 2 mm.

11. The process of any of claims 8 to 10, wherein the drying is performed at a temperature of 100 to 150°C, optionally 120 to 140°C, optionally for a period of between 2 and 6 hours.

12. A lithium secondary battery comprising the electrode of any of claims 1 to 7 or an electrode produced by the process of any of claims 8 to 11.

**EP 2 631 973 B1**

**Patentansprüche**

1. Elektrode für eine Lithiumsekundärbatterie, umfassend eine elektrodenaktive Materialschicht umfassend eine Silizium-basierte Legierung, wobei die elektrodenaktive Materialschicht eine Oberflächenrauheit zwischen 0,5 und 12 $\mu$m und eine Oberflächenrauheitsabweichung gleich oder kleiner als 5 $\mu$m aufweist, wobei die Silizium-basierte Legierung Silizium, ein oder mehrere Metalle, ausgewählt zwischen Aluminium (Al), Nickel (Ni), Eisen (Fe), Mangan (Mn) und Titanium (Ti) umfasst, wobei optional die Silizium-basierte Legierung von Silizium-M-A dargestellt wird, wobei M und A voneinander unterschiedlich sind, und M Aluminium (Al), Titanium (Ti), oder Eisen (Fe) und A Nickel (Ni), Eisen (Fe) oder Mangan (Mn) sind.

2. Elektrode nach Anspruch 1, wobei die Oberflächenrauheitsabweichung gleich oder kleiner als 2 $\mu$m ist, und optional zwischen 0,1 und 2 $\mu$m liegt.

3. Elektrode nach Anspruch 1 oder Anspruch 2, wobei die Oberflächenrauheit zwischen 1 und 12 $\mu$m, optional zwischen 1 und 10 $\mu$m oder zwischen 7 und 10 $\mu$m liegt.

4. Elektrode nach einem der Ansprüche 1 bis 3, wobei die Silizium-basierte Legierung von Silizium-M-A dargestellt wird, und die Menge an Silizium in einem Bereich zwischen 60 und 75 %-Atom liegt, M in einem Bereich zwischen 5 und 25 Atom %, und eine Menge an A in einem Bereich zwischen 10 und 25 Atom % liegen kann.

5. Elektrode nach einem der Ansprüche 1 bis 4, wobei die Silizium-basierte Legierung ausgewählt ist aus der Gruppe bestehend aus $Si_{68}Al_8Ni_{24}$, $Si_{60}Ti_{20}Ni_{20}$, $Si_{70}Fe_{15}Mn_{15}$, $Si_{70}Al_{15}Fe_{15}$, $Si_{70}Al_{15}Mn_{15}$, $Si_{70}Ti_{15}Fe_{15}$, $Si_{65}Ti_{17.5}Ni_{17.5}$, oder $Si_{68}Ti_{16}Ni_{16}$ und einer entsprechenden Kombination.

6. Elektrode nach einem der Ansprüche 1 bis 5, wobei die Dichte der Elektrode in einem Bereich zwischen 0,80 und 0,90 g/cm$^3$ (g/cc) liegt.

7. Elektrode nach einem der Ansprüche 1 bis 6, wobei die Silizium-basierte Legierung aktives und inaktives Silizium umfasst, und die Menge an aktivem Silizium zwischen 40 und 80 Atom% beträgt, basiert auf einer Gesamtmenge an aktivem und inaktivem Silizium in der Silizium-basierten Legierung.

8. Vorgang zum Aufbereiten der Elektrode für eine Lithiumsekundärbatterie nach einem der Ansprüche 1 bis 7, wobei der Vorgang umfasst:

   Mischen eines Lösungsmittels und eines elektrodenaktiven Materials umfassend eine Silizium-basierte Legierung und optional ein leitendes Material und optional einen Binder, um eine Elektrodenzusammensetzung bereitzustellen;
   Mahlen der Elektrodenzusammensetzung, um eine gemahlene Elektrodenzusammensetzung zu erzeugen;
   Beschichten der gemahlenen Elektrodenzusammensetzung auf einen Stromkollektor; und
   Trocknen der gemahlenen Elektrodenzusammensetzung, um die Elektrode zu bilden, wobei das Mischen umfasst:

      Erstens, Laden des Lösungsmittels in eine Mahlmaschine;
      nach dem Laden des Lösungsmittels in die Mahlmaschine, Zugeben des elektrodenaktiven Materials, des leitenden Materials und des Binders in die Mahlmaschine und wobei das elektrodenaktive Material in der gemahlenen Elektrodenzusammensetzung einen durchschnittlichen Partikeldurchmesser kleiner oder gleich 10 $\mu$m aufweist.

9. Vorgang nach Anspruch 8, wobei das Mischen und das Mahlen mit einer Umdrehungsgeschwindigkeit zwischen 750 und 2500 Umdrehungen/Minute, optional zwischen 1000 und 2000 Umdrehungen/Minute ausgeführt werden, und das Mischen und Mahlen eine Dauer zwischen 15 Minuten und 1 Stunde, optional zwischen 20 und 45 Minuten aufweisen.

10. Vorgang nach einem der Ansprüche 8 bis 9, wobei das Mahlen in einer Kugelmühle ausgeführt wird, welche Kugeln aufweist, und die Kugeln einen durchschnittlichen Partikeldurchmesser zwischen 0,25 mm und 3 mm, optional zwischen 0,5 und 2 mm aufweisen.

11. Vorgang nach einem der Ansprüche 8 bis 10, wobei das Trocknen bei einer Temperatur zwischen 100 und 150°C, optional zwischen 120 und 140°C, optional für eine Dauer zwischen 2 und 6 Stunden ausgeführt wird.

**12.** Lithiumsekundärbatterie umfassend die Elektrode nach einem der Ansprüche 1 bis 7 oder eine Elektrode, welche durch den Vorgang nach einem der Ansprüche 8 bis 11 hergestellt wird.

**Revendications**

**1.** Électrode pour une batterie rechargeable au lithium comprenant une couche de matériau actif d'électrode comprenant un alliage à base de silicium, dans laquelle la couche de matériau actif d'électrode présente une rugosité de surface comprise entre 0,5 et 12 $\mu$m et un écart de rugosité de surface inférieur ou égal à 5 $\mu$m, dans laquelle l'alliage à base de silicium comprend du silicium, un métal ou plusieurs métaux sélectionné(s) parmi l'aluminium (Al), le nickel (Ni), le fer (Fe), le manganèse (Mn), et le titane (Ti), dans laquelle l'alliage à base de silicium est éventuellement représenté par du silicium-M-A, M et A étant différents l'un de l'autre, M correspondant à de l'aluminium (Al), du titane (Ti), ou du fer (Fe), et A correspondant à du nickel (Ni), du fer (Fe), ou du manganèse (Mn).

**2.** Électrode selon la revendication 1, dans laquelle l'écart de rugosité de surface est inférieur ou égal à 2 $\mu$m, et se situe éventuellement dans une plage comprise entre 0,1 et 2 $\mu$m.

**3.** Électrode selon la revendication 1 ou 2, dans laquelle la rugosité de surface est comprise entre 1 et 12 $\mu$m, et se situe éventuellement entre 1 et 10 $\mu$m ou entre 7 et 10 $\mu$m.

**4.** Électrode selon l'une quelconque des revendications 1 à 3, dans laquelle l'alliage à base de silicium est représenté par du silicium-M-A et la quantité de silicium se situe dans une plage comprise entre 60 et 75 %ato, M peut se situer dans une plage comprise entre 5 et 25 %ato, et une quantité de A peut se situer dans une plage comprise entre 10 et 25 %ato.

**5.** Électrode selon l'une quelconque des revendications 1 à 4, dans laquelle l'alliage à base de silicium est sélectionné parmi le groupe constitué de $Si_{68}Al_8Ni_{24}$, $Si_{60}Ti_{20}Ni_{20}$, $Si_{70}Fe_{15}Mn_{15}$, $Si_{70}Al_{15}Fe_{15}$, $Si_{70}Al_{15}Mn_{15}$, $Si_{70}Ti_{15}Fe_{15}$, $Si_{65}Ti_{17.5}Ni_{17.5}$ ou $Si_{68}Ti_{16}Ni_{16}$ et une combinaison de ceux-ci.

**6.** Électrode selon l'une quelconque des revendications 1 à 5, dans laquelle la densité de l'électrode se situe dans une plage comprise entre 0,80 et 0,90 g/cm$^3$ (g/cc).

**7.** Électrode selon l'une quelconque des revendications 1 à 6, dans laquelle l'alliage à base de silicium comprend du silicium actif et du silicium inactif, et la quantité du silicium actif est comprise entre 40 %ato et 80 %ato en se basant sur une quantité totale du silicium actif et du silicium inactif dans l'alliage à base de silicium.

**8.** Procédé permettant de préparer l'électrode pour une batterie rechargeable au lithium selon l'une quelconque des revendications 1 à 7, le procédé comprenant les étapes consistant à :

mélanger un solvant et un matériau actif d'électrode comprenant un alliage à base de silicium et éventuellement un matériau conducteur et éventuellement un liant, afin de réaliser une composition d'électrode ;
broyer la composition d'électrode pour former une composition d'électrode broyée ;
enduire la composition d'électrode broyée sur un collecteur de courant ; et
sécher la composition d'électrode broyée pour former l'électrode, dans lequel l'étape de mélange comprend les étapes consistant à :

charger d'abord le solvant dans une machine à broyer ;
après chargement du solvant dans la machine à broyer, ajouter le matériau actif d'électrode, le matériau conducteur et le liant dans la machine à broyer, le matériau actif d'électrode de la composition d'électrode broyée présentant un diamètre de particule moyen inférieur ou égal à 10 $\mu$m.

**9.** Procédé selon la revendication 8, dans lequel le mélange et le broyage sont mis en oeuvre à une vitesse comprise entre 750 et 2 500 tours par minute, éventuellement comprise entre 1 000 et 2 000 tours par minute, et le mélange et le broyage présentent une durée comprise entre 15 minutes et une heure, éventuellement comprise entre 20 minutes et 45 minutes.

**10.** Procédé selon l'une quelconque des revendications 8 à 9, dans lequel le broyage est réalisé dans un broyeur à billes comprenant des billes et les billes présentent un diamètre de particule moyen compris entre 0,25 mm et 3 mm, éventuellement compris entre 0,5 et 2 mm.

**11.** Procédé selon l'une quelconque des revendications 8 à 10, dans lequel le séchage est mis en oeuvre à une température comprise entre 100 et 150°C, éventuellement comprise entre 120 et 140°C, éventuellement pour une durée comprise entre 2 et 6 heures.

**12.** Batterie rechargeable au lithium comprenant l'électrode selon l'une quelconque des revendications 1 à 7 ou une électrode produite grâce au procédé selon l'une quelconque des revendications 8 à 11.

FIG. 1

ELECTROLYTIC SOLUTION

A

ELECTROLYTIC SOLUTION

B

FIG. 2

FIG. 3

FIG. 4

# FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005031957 A

- WO 2007064531 A